# EUROPEAN PATENT APPLICATION

(11) **EP 4 663 561 A1**
(43) Date of publication of application: **17.12.2025**
(21) Application number: 25180394.6
(22) Date of filing: 03.06.2025
(51) Int. Cl.: B65B 19/22, B65B 51/14, B65B 59/00, B65B 59/04, B65B 65/00, B65B 65/02, B29C 65/00, B65B 35/24, B65B 49/04

(54) **WRAPPING UNIT AND METHOD TO PRODUCE, TOGETHER, TWO SEALED WRAPS CONTAINING TWO RESPECTIVE GROUPS OF SMOKING ARTICLES**

(30) Priority: 05.06.2024 IT 202400012883
(71) Applicant: G.D S.p.A., 40133 Bologna (IT)
(72) Inventor: MECCAGNI, Mattia, 40133 BOLOGNA (IT); MARRONE, Quintino, 40133 BOLOGNA (IT); SARTI, Stefano, 40133 BOLOGNA (IT); BENASSI, Massimo, 40133 BOLOGNA (IT); SQUARZONI, Michele, 40133 BOLOGNA (IT)
(74) Representative: Studio Torta S.p.A.

(57) **Abstract**

A wrapping unit (11) and a wrapping method to produce, together, two sealed wraps (1) containing two respective groups (2) of smoking articles. The following are provided: a wrapping conveyor (12), which is designed to convey the two sealed wraps (1) side by side along two respective wrapping paths (P) parallel to each other; two sealing devices (16), each coupled to the wrapping conveyor (12), configured to create a seal on two opposite sides of a respective sealed wrap (1), and having at least one outer sealing head (17) arranged outside the wrapping paths (P) and at least one inner sealing head (18) arranged at the centre of the wrapping paths (P); and an actuator device (25) configured to move the two outer sealing heads (17) between a sealing position, in which the two outer sealing heads (17) are at a minimum distance from the respective inner sealing heads (18), and a moving position, in which the two outer sealing heads (17) are at an intermediate distance, greater than the minimum distance, from the respective inner sealing heads (18).

## Description

### CROSS-REFERENCE TO RELATED APPLICATIONS

This patent application claims priority from Italian patent application no. 102024000012883 filed on June 5, 2024, the entire disclosure of which is incorporated herein by reference.

### TECHNICAL FIELD

The present invention relates to a wrapping unit and to a wrapping method to produce, together, two sealed wraps containing two respective groups of smoking articles and in particular by simultaneously folding two wrapping sheets around the two groups of smoking articles.

### PRIOR ART

Patent application WO2023180862A1 describes a wrapping unit to produce, together, two sealed wraps by simultaneously folding two wrapping sheets around two corresponding groups of smoking articles. The wrapping unit comprises: a wrapping conveyor, which is designed to convey the two groups of smoking articles side by side and coupled to the two wrapping sheets along a straight wrapping path; two folding devices, each coupled to the wrapping conveyor and arranged along the wrapping path in order to fold two opposite ends of a wrapping sheet around a corresponding group of smoking articles; and two sealing devices, each coupled to the wrapping conveyor and arranged along the wrapping path downstream of the respective folding device to create a seal on two sides of a wrapping sheet folded around a corresponding group of smoking articles. Each sealing device comprises an outer sealing head arranged outside the wrapping conveyor, an inner sealing head arranged at the centre of the wrapping conveyor and an actuator configured to move the two sealing heads between: a work position in which the two sealing heads have a first mutual distance which determines a compression of the corresponding group of smoking articles, a moving position in which the two sealing heads have a second mutual distance which is greater than the first mutual distance and allows the corresponding group of smoking articles to move along the wrapping path, and a rest position in which the two sealing heads have a third mutual distance, which is greater than the second mutual distance. In particular, each actuator is configured to move the two sealing heads between the work position and the moving position along a first direction perpendicular to the wrapping path and is configured to move at least the inner sealing head to and from the rest position along a second direction perpendicular to the first direction and to the wrapping path.

However, the manufacturing of the inner sealing heads is relatively complex (particularly when the sealed wraps are small) since the space available for the inner sealing heads is very limited and it is necessary to equip the inner sealing heads with a movement in two different directions perpendicular to each other.

Patent application DE102019121018A1 describes a method for quality control of a seal, wherein an actual value is determined of the heat transmitted between a sealing device and an article in which the sealing is performed and the actual value is compared with a reference value.

Patent application EP1854726A2 describes a packing machine for packing cigarettes provided with a duct along which the groups of cigarettes are fed in a stepped manner by a pushing device.

### DESCRIPTION OF THE INVENTION

The object of the present invention is to provide a wrapping unit and a wrapping method to produce, together, two sealed wraps containing two respective groups of smoking articles, said wrapping unit and method being simple to manufacture and implement, allowing operating at a high production speed (measured as sealed wraps produced in the time unit), and allowing quickly performing the size changing operations.

In accordance with the present invention, a wrapping unit and a wrapping method to produce, together, two sealed wraps containing two respective groups of smoking articles are provided, according to what is claimed in the appended claims.

The claims describe embodiments of the present invention forming integral part of the present description.

### BRIEF DESCRIPTION OF THE DRAWINGS

The present invention will now be described with reference to the accompanying drawings, which illustrate a non-limiting example embodiment thereof, wherein:
- Figure 1 is a front perspective view of a sealed wrap;
- Figure 2 is a perspective view of a group of cigarettes coupled to a reinforcement element and contained in the sealed wrap of Figure 1;
- Figure 3 is a plan view of a wrapping sheet utilized for manufacturing the sealed wrap of Figure 1;
- Figures 4, 5 and 6 are three schematic plan views of a wrapping unit which produces the sealed wraps of Figure 1 and has sealing heads in three different positions assumed in different operating instants;
- Figures 7, 8 and 9 are three schematic front views of the wrapping unit of Figures 4, 5 and 6 and having the sealing heads in three different positions assumed in different operating instants;
- Figures 10 and 11 are two different perspective views of a conveying beam of the wrapping unit of Figures 4, 5 and 6; and
- Figures 12-15 are four perspective views with parts removed for clarity of the wrapping unit of Figures 4, 5 and 6.

### PREFERRED EMBODIMENTS OF THE INVENTION

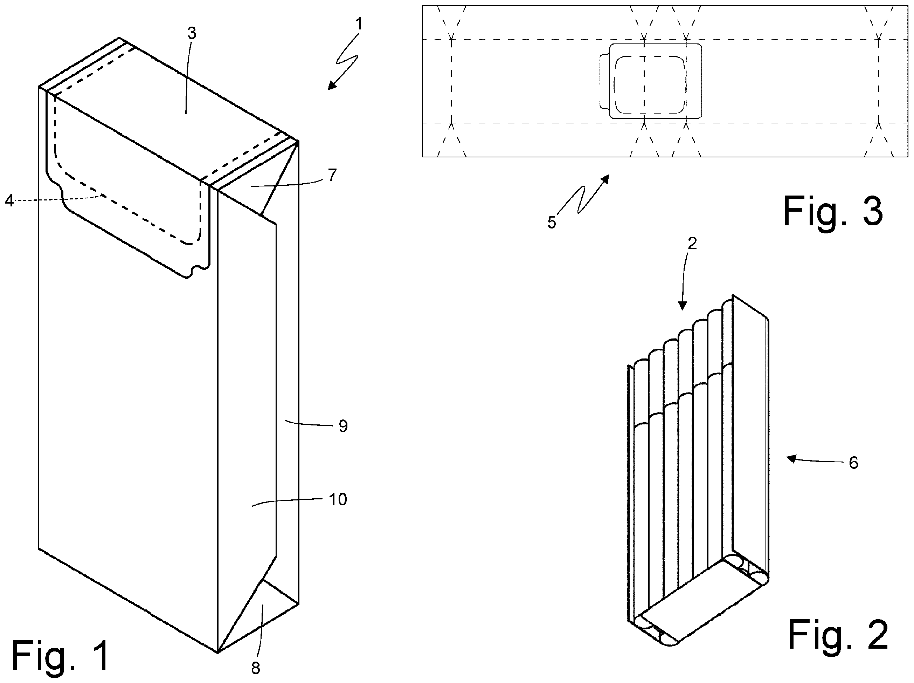

In Figure 1, reference numeral 1 indicates, as a whole, a sealed wrap which can be part of a rigid twin (namely provided with two sealed wraps 1 side by side) pack for cigarettes. The sealed wrap 1 encloses a group 2 of cigarettes having a parallelepiped shape (illustrated in Figure 2) and has, at the top and frontally, an extraction opening 3 for extracting the cigarettes, which is delimited by a tearable pre-weakened line, is closed by a reusable closing label 4 and involves a portion of a front wall of the sealed wrap 1 and a portion of an upper wall of the sealed wrap 1. According to a preferred embodiment, the closing label 4 is fixed to the sealed wrap 1 of cigarettes by means of the repositionable adhesive that does not dry, which is applied to the lower surface of the closing label 4 and is arranged all around the extraction opening 3 for allowing the closing label 4 to be several times partially separated from the sealed wrap 1 and then again fixed to the sealed wrap 1.

According to a different embodiment not illustrated, the sealed wrap 1 is devoid of the extraction opening 3 and of the relative closing label 4 and has a removable upper portion, which is separate from the remaining part of the sealed wrap 1 by a tearable pre-weakened line so as to be eliminated by tear upon the first opening of the sealed wrap 1; in this embodiment, the sealed wrap 1 is preferably provided with a tearable opening tape in order to facilitate the breaking of the sealed wrap 1 along the pre-weakened line.

The sealed wrap 1 is obtained by folding a wrapping sheet 5 (illustrated in Figure 3), which has a rectangular shape, comprises at least one layer of airproof and heat-sealable plastic material, and is directly folded around the group 2 of cigarettes so as to be in direct contact with the cigarettes. Once the wrapping sheet 5 is folded around the group 2 of cigarettes for forming the sealed wrap 1, the shape of the sealed wrap 1 is stabilized by heat-sealing the superimposed portions of the wrapping sheet 5.

The sealed wrap 1 could comprise a reinforcement element 6 (illustrated in Figure 2), which consists of carboard or rigid paperboard, is "U"-shaped and is arranged inside the sealed wrap 1 in contact with the group 2 of cigarettes.

The formation of the sealed wrap 1 provides for initially forming the group 2 of cigarettes and then folding the reinforcement element 6 around the group 2 of cigarettes; subsequently, the wrapping sheet 5 is folded around the group 2 of cigarettes coupled to the reinforcement element 6. The modes for folding the wrapping sheet 5 around the group 2 of cigarettes coupled to the reinforcement element 6 are known and are for example described in patent application WO2023180862A1; in alternative, the two open lateral edges of the wrapping sheet 5 could be closed by means of two longitudinal sealing fins in place of the so-called *"soap fold".*

In particular, the two open lateral edges of the wrapping sheet 5 (which has a tubular shape around the group 2 of cigarettes) are closed by means of the so-called *"soap fold"* which for each lateral edge provides for: folding two minor flaps 7 and 8 against the minor lateral wall of the group 2 of cigarettes, folding a major flap 9 against the minor lateral wall of the group 2 of cigarettes and on top of the two previously folded minor flaps 7 and 8, and finally folding the other major flap 10 against the minor lateral wall of the group 2 of cigarettes and on top of the two previously folded minor flaps 7 and 8 and the previously folded major flap 9.

After completing the folding of the wrapping sheet 5 around the group 2 of cigarettes by closing the two lateral edges by means of respective lateral folds, these lateral folds are stabilized by means of heat-sealing, namely heat-sealing the superimposed parts of the wrapping sheet 5 in the area of the minor lateral walls of the group 2 of cigarettes.

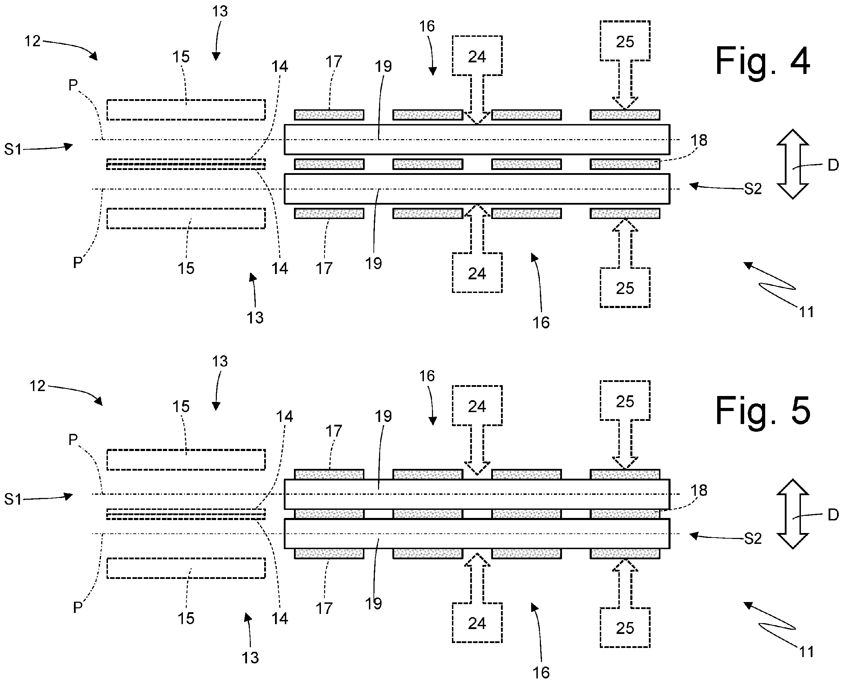

Figures 4, 5 and 6 schematically illustrate a part of a wrapping unit 11 which manufactures two sealed wraps 1 at a time.

The wrapping unit 11 comprises a wrapping conveyor 12 which receives the pairs of groups 2 of cigarettes side by side and coupled to the wrapping sheets 5 and is designed to convey the pairs of groups 2 of cigarettes side by side and coupled to the wrapping sheets 5 along two corresponding straight wrapping paths P (parallel and next to each other) so as (to end folding) to fold each wrapping sheet 5 around the corresponding group 2 of cigarettes. In particular, each wrapping path P extends from an input station S1 in which the wrapping conveyor 12 receives two groups 2 of cigarettes coupled to the wrapping sheets 5 at a time and ends in an output station S2 in which the pairs of completed sealed wraps 1 (namely each composed of a wrapping sheet 5 completely folded around a corresponding group 2 of cigarettes) leave the wrapping conveyor 12.

Along each wrapping path P (namely while being conveyed by the wrapping conveyor 12) a respective sealed wrap 1 is laterally closed by means of lateral folds which are subsequently stabilized by means of two longitudinal seals completing (ending) the creation of the sealed wrap 1.

According to what is illustrated in Figures 4, 5 and 6, the wrapping unit 11 comprises two folding devices 13, each coupled to the wrapping conveyor 12 and configured to fold a wrapping sheet 5 around the corresponding group 2 of cigarettes completing the formation of the sealed wrap 1, namely closing the two open ends of the wrapping sheet 5 folded in a tubular manner. In other words, each folding device 13 folds on each side of a sealed wrap 1 the flaps 7-10 as is illustrated in Figure 1 and as explained in the foregoing.

The wrapping conveyor 12 conveys along the two wrapping paths P a sequence of pairs of groups 2 of cigarettes side by side and coupled to the wrapping sheets 5 and thus the two folding devices 13 are side by side for performing, together and simultaneously, the folding of two wrapping sheets 5 around two groups 2 of cigarettes side by side.

In particular, each folding device 13 comprises two fixed folding spirals 14 and 15 (namely folding profiles entirely devoid of parts in movement) arranged along the respective wrapping path P (namely along the wrapping conveyor 12). In particular, four fixed folding spirals 14 and 15 are provided in total, each of which folds a lateral end of a corresponding wrapping sheet 5 folded in a tubular manner: the wrapping conveyor 12 conveys along the two wrapping paths P a sequence of pairs of groups 2 of cigarettes side by side and coupled to the wrapping sheets 5 folded in a tubular manner, therefore for each group 2 of cigarettes two fixed folding spirals 14 and 15 are necessary, arranged at the two opposite ends of the group 2 of cigarettes. Consequently, two fixed folding spirals 14 are arranged at the centre of the wrapping conveyor 12 (one fixed folding spiral 14 operating with the group 2 of cigarettes arranged on the right and the other fixed folding spiral 14 operating with the group 2 of cigarettes arranged on the left) and two fixed folding spirals 15 on the sides of the wrapping conveyor 12 (one fixed folding spiral 15 operating with the group 2 of cigarettes arranged on the right and the other fixed folding spiral 15 operating with the group 2 of cigarettes arranged on the left).

According to what is illustrated in Figures 4, 5 and 6, the wrapping unit 11 comprises two sealing devices 16, each coupled to the wrapping conveyor 12 and configured to create the longitudinal seals on a wrapping sheet 5 folded around a group 2 of cigarettes completing the formation of the corresponding sealed wrap 1. Each sealing device 16 is coupled to the wrapping conveyor 12 and is arranged along the two wrapping paths P downstream of the respective folding device 13 so as to create a seal on two sides of a wrapping sheet 5 folded around a corresponding group 2 of cigarettes.

According to a preferred embodiment, each sealing device 16 comprises a plurality of outer sealing heads 17 arranged outside the wrapping conveyor 12 and a plurality of inner sealing heads 18 arranged in the middle of the wrapping conveyor 12 (namely in the free central zone between two groups 2 of cigarettes side by side). Consequently, two inner sealing heads 18 are arranged at the centre of the wrapping conveyor 12 (one inner sealing head 18 operating with the group 2 of cigarettes arranged on the right and the other inner sealing head 18 operating with the group 2 of cigarettes arranged on the left) and two outer sealing heads 17 on the sides of the wrapping conveyor 12 (one outer sealing head 17 operating with the group 2 of cigarettes arranged on the right and the other outer sealing head 17 operating with the group 2 of cigarettes arranged on the left). Each sealing device 16 comprises several sealing heads 17 and 18 arranged in sequence along the wrapping conveyor 12 (namely along the two wrapping paths P) so that the longitudinal seals on each wrapping sheet 5 are performed in several distinct and subsequent steps (four distinct and subsequent steps in the embodiment illustrated in the accompanying figures).

The wrapping conveyor 12 conveys along the two wrapping paths P a sequence of pairs of groups 2 of cigarettes side by side and coupled to the wrapping sheets 5 and thus the two sealing devices 16 are side by side so as to perform, together and simultaneously, the sealing of two wrapping sheets 5 around two groups 2 of cigarettes side by side.

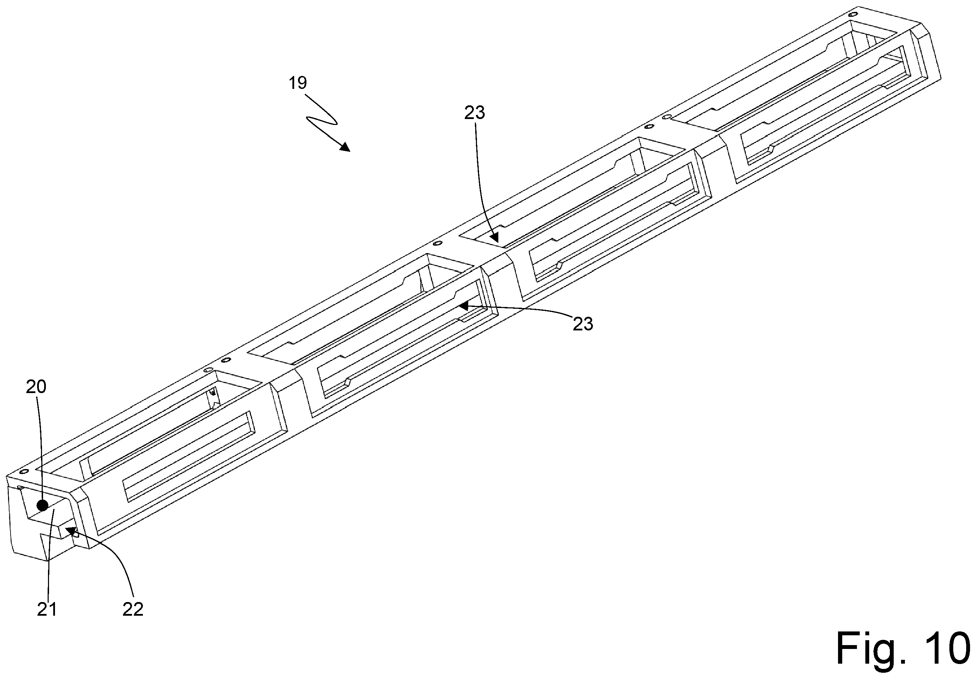

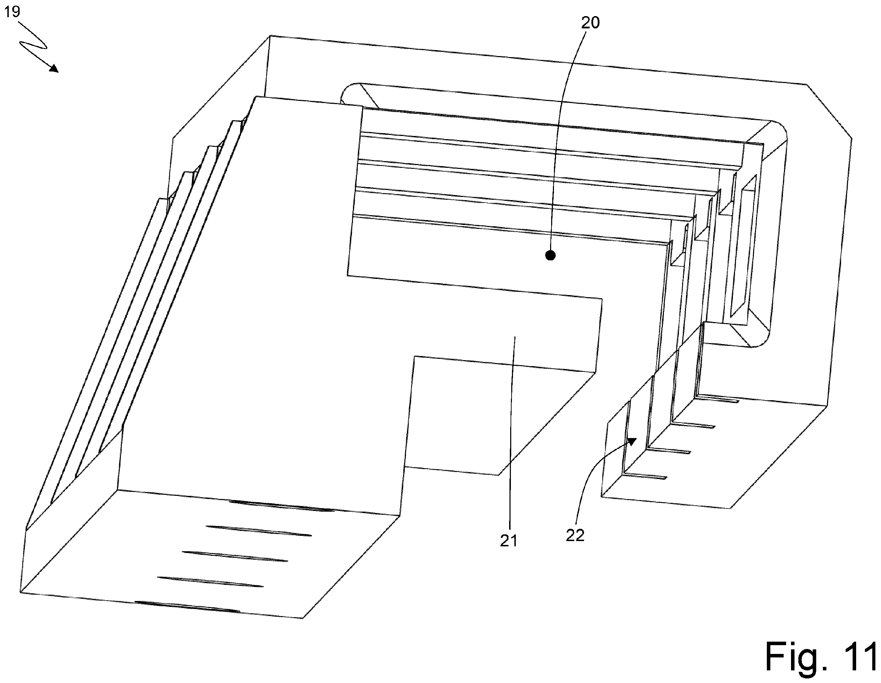

The wrapping conveyor 12 comprises two conveying beams 19 (schematically illustrated in Figures 4-9 and specifically illustrated in Figures 10 and 11) which are arranged parallel and next to each other in the area of the sealing devices 16. Each conveying beam 19 is oriented parallel to the wrapping paths P and internally (centrally) has a channel 20 which defines the respective wrapping path P and, in use, is crossed from side to side by the corresponding sealed wraps 1 conveyed by the wrapping conveyor 12.

The wrapping conveyor 12 comprises a pushing device which pushes the sealed wraps 1 along the channel 20 of the corresponding conveying beam 19 from the back and thus for following the respective wrapping path P. According to what is better illustrated in Figure 11, a lower wall 21 of each conveying beam 19 has a continuous slit 22 which is arranged parallel to the respective wrapping path P and crosses the conveying beam 19 from side to side; the pushing device comprises a series of pushing members which, in use, are arranged inside the channel 20 of the corresponding conveying beam 19 and are supported by respective support arms, which engage the slit 22. Preferably, the pushing device comprises a conveyor belt which is wrapped in a ring manner around two end pulleys (one of which is motorized) and to which the support arms of the pushing members are fixed.

The wrapping conveyor 12, namely the pushing device of the wrapping conveyor 12 actuated by the conveying belt, has a stepped law of movement alternating motion steps and stop steps.

According to what is better illustrated in Figure 10, each conveying beam 19 laterally comprises a series of through openings 23 (windows), which are arranged in the area of the sealing heads 17 and 18 and through which the sealing heads 17 and 18 can get into the conveying beam 19 from the outside and then come into contact with the sealed wraps 1 that are inside the conveying beam 19. In other words, each conveying beam 19 has four through openings 23 (windows) which are arranged on a side in the area of the respective sealing heads 17 and four through openings 23 (windows) which are arranged on the opposite side in the area of the respective sealing heads 18.

The inner sealing heads 18 are mounted in a fixed position on a frame of the wrapping unit 11 and thus never vary their position (namely they never make any movement). In the preferred embodiment illustrated in the accompanying figures, at the centre there is provided a single common heated body, which constitutes the inner sealing head 18 for the right side and the inner sealing head 18 for the left side; in alternative, at the centre there are provided two separate and independent heated bodies, which constitute the inner sealing head 18 for the right side and the inner sealing head 18 for the left side, respectively.

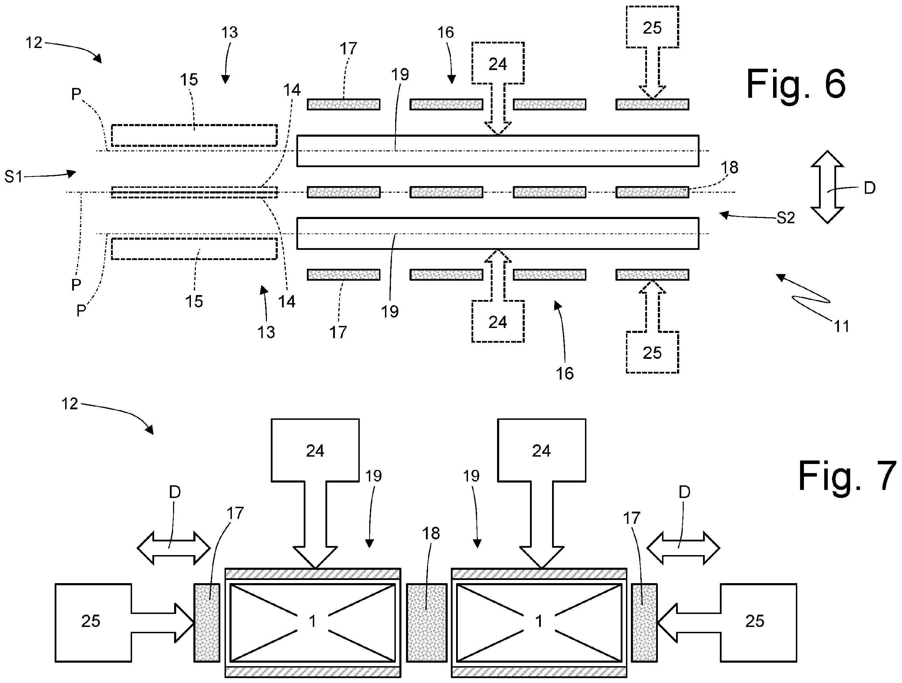

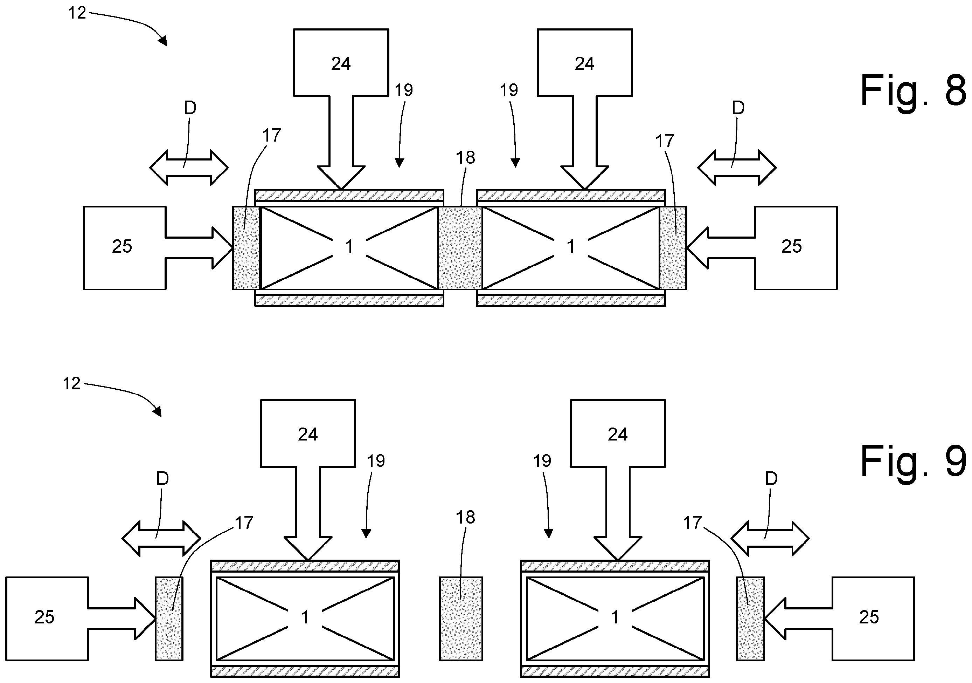

According to what is illustrated in Figures 4-9, the two conveying beams 19 are mounted movable for translating along a transverse and horizontal direction D which is perpendicular to the wrapping paths P between a sealing position (illustrated in Figures 5 and 8), in which the two conveying beams 19 are arranged closer to the inner sealing heads 18 for bringing the sealed wraps 1 which are inside the conveying beams 19 into contact with the respective inner sealing heads 18, a moving position (illustrated in Figures 4 and 7), in which the two conveying beams 19 are detached from the inner sealing heads 18 for separating the sealed wraps 1 which are inside the conveying beams 19 from the respective inner sealing heads 18 and thus allowing the sealed wraps 1 which are inside the conveying beams 19 to move along the two wrapping paths P without touching (scraping against) the inner sealing heads 18, and a stop position (illustrated in Figures 6 and 9), in which the two conveying beams 19 are far from the inner sealing heads 18 for moving the sealed wraps 1 which are inside the conveying beams 19 away from the respective inner sealing heads 18 and thus avoiding that during a prolonged stop (also of several minutes) the inner sealing heads 18 can exceedingly heat the sealed wraps 1 which are inside the conveying beams 19.

In other words, in the sealing position (illustrated in Figures 5 and 8) the conveying beams 19 are at a minimum distance from the inner sealing heads 18, in the moving position (illustrated in Figures 4 and 7) the conveying beams 19 are at an intermediate distance (greater than the minimum distance) from the inner sealing heads 18, and in the stop position (illustrated in Figures 6 and 9) the conveying beams 19 are at a maximum distance (greater than the minimum distance and the intermediate distance) from the inner sealing heads 18.

It is important to highlight that the movement of the conveying beams 19 between the sealing, moving and stop positions can be only a translation along the transverse direction D or it can be a roto-translation or a rotation having a prevalent movement component along the transverse direction D.

The wrapping unit 11 comprises an actuator device 24 which is configured to move the two conveying beams 19 between the sealing, moving and stop positions. During the normal operation of the wrapping unit 11, the actuator device 24 cyclically moves the two conveying beams 19 between the sealing position (illustrated in Figures 5 and 8) during the stop steps of the wrapping conveyor 12 and the moving position (illustrated in Figures 4 and 7) during the motion steps of the wrapping conveyor 12. The actuator device 24 moves the two conveying beams 19 in the stop position (illustrated in Figures 6 and 9) when the operation of the wrapping unit 11 is interrupted (for example for a cleaning intervention, for a maintenance intervention or due to a standstill of another machine of the production line).

Similarly, the outer sealing heads 17 are mounted movable for translating along the transverse direction D between a sealing position (illustrated in Figures 5 and 8) in which the outer sealing heads 17 press (compress) the respective sealed wraps 1 which are inside the conveying beams 19 against the respective inner sealing heads 18 for performing the heat-sealing, a moving position (illustrated in Figures 4 and 7) in which the outer sealing heads 17 are detached from the respective sealed wraps 1 which are inside the conveying beams 19 for allowing the respective sealed wraps 1 to move along the two wrapping paths P without touching (scraping against) the outer sealing heads 17, and a stop position (illustrated in Figures 6 and 9) in which the outer sealing heads 17 are far from the sealed wraps 1 which are inside the conveying beams 19 for avoiding that during a prolonged stop (also of several minutes) the outer sealing heads 17 can exceedingly heat the sealed wraps 1 which are inside the conveying beams 19.

In other words, in the sealing position (illustrated in Figures 5 and 8) the outer sealing heads 17 are at a minimum distance from the inner sealing heads 18, in the moving position (illustrated in Figures 4 and 7) the outer sealing heads 17 are at an intermediate distance (greater than the minimum distance) from the inner sealing heads 18, and in the stop position (illustrated in Figures 6 and 9) the outer sealing heads 17 are at a maximum distance (greater than the minimum distance and the intermediate distance) from the inner sealing heads 18.

It is important to highlight that the movement of the outer sealing heads 17 between the sealing, moving and stop positions can be only a translation along the transverse direction D or it can be a roto-translation or a rotation having a prevalent movement component along the transverse direction D.

The wrapping unit 11 comprises an actuator device 25 which is separate from and independent of the actuator device 24 and is configured to move the outer sealing heads 17 between the sealing, moving and stop positions. During the normal operation of the wrapping unit 11, the actuator device 25 cyclically moves the outer sealing heads 17 between the sealing position (illustrated in Figures 5 and 8) during the stop steps of the wrapping conveyor 12 and the moving position (illustrated in Figures 4 and 7) during the motion steps of the wrapping conveyor 12. The actuator device 25 moves the outer sealing heads 17 in the stop position (illustrated in Figures 6 and 9) when the operation of the wrapping unit 11 is interrupted (for example for a cleaning intervention, for a maintenance intervention or due to a standstill of another machine of the production line). As mentioned in the foregoing, the conveying beams 19 and the outer sealing heads 17 assume the sealing position (illustrated in Figures 5 and 8) when the wrapping conveyor 12 is in a stop step (namely is halted) for allowing the sealing heads 17 and 18 to perform the longitudinal heat-sealing of the superimposed ends of the wrapping sheet 5; the compression exerted by the sealing heads 17 and 18 on the sealed wraps 1 (each containing a group 2 of cigarettes wrapped in a wrapping sheet 5) allows performing in an optimal manner the longitudinal heat-sealing of the superimposed ends of the wrapping sheet 5. Such compression on the sealed wraps 1 is made by the movement of drawing the outer sealing heads 17 close to the inner sealing heads 18 which are halted, namely the outer sealing heads 17 act as movable *"hammer",* whereas the inner sealing heads 18 act as fixed *"anvil".* Whereas, the conveying beams 19 and the outer sealing heads 17 assume the moving position (illustrated in Figures 4 and 7) when the wrapping conveyor 12 is in a motion step (namely is moving) for allowing the corresponding sealed wraps 1 (each containing a group 2 of cigarettes wrapped in a wrapping sheet 5) to move along the respective wrapping paths P together with the wrapping conveyor 12 without scraping against the sealing heads 17 and 18.

In other words, the wrapping conveyor 12 has a stepped law of movement alternating motion steps and stop steps; the actuators 24 and 25 are configured to keep the conveying beams 19 and the outer sealing heads 17 in the moving position during the motion steps of the wrapping conveyor 12 and to move the conveying beams 19 and the outer sealing heads 17 from the moving position to the sealing position and vice versa during the stop steps of the wrapping conveyor 12. Furthermore, the actuators 24 and 25 are configured to move the conveying beams 19 and the outer sealing heads 17 in the stop position when the wrapping unit 11 is stopped and the wrapping conveyor 12 is thus halted.

By way of example, the stroke that is carried out by the conveying beams 19 and by the outer sealing heads 17 for moving between the moving position and the sealing position is approximately 1-4 mm, whereas the stroke carried out by the conveying beams 19 and by the outer sealing heads 17 for moving towards the stop position is approximately 5-10 mm.

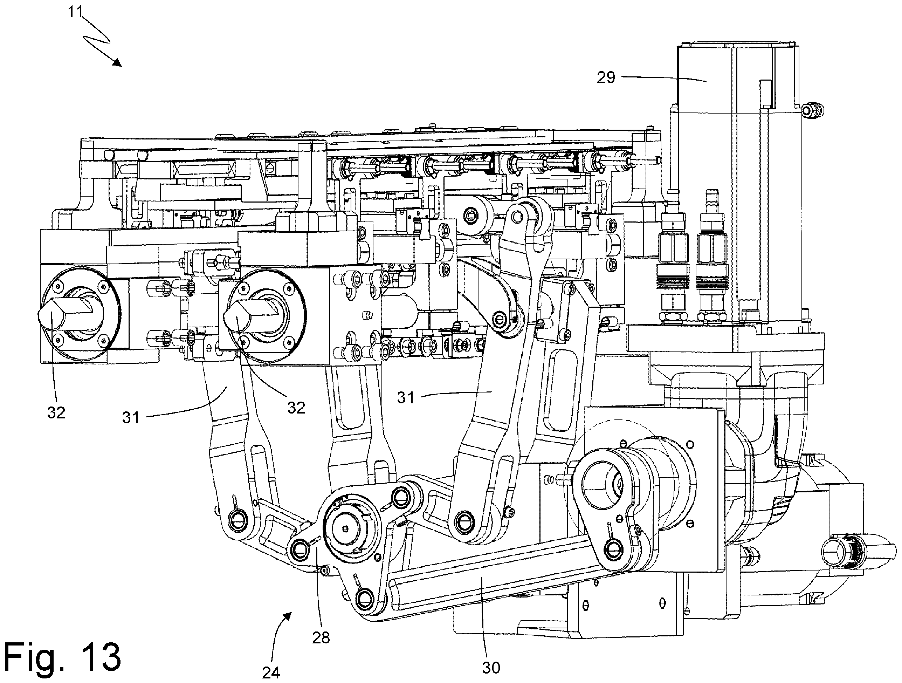

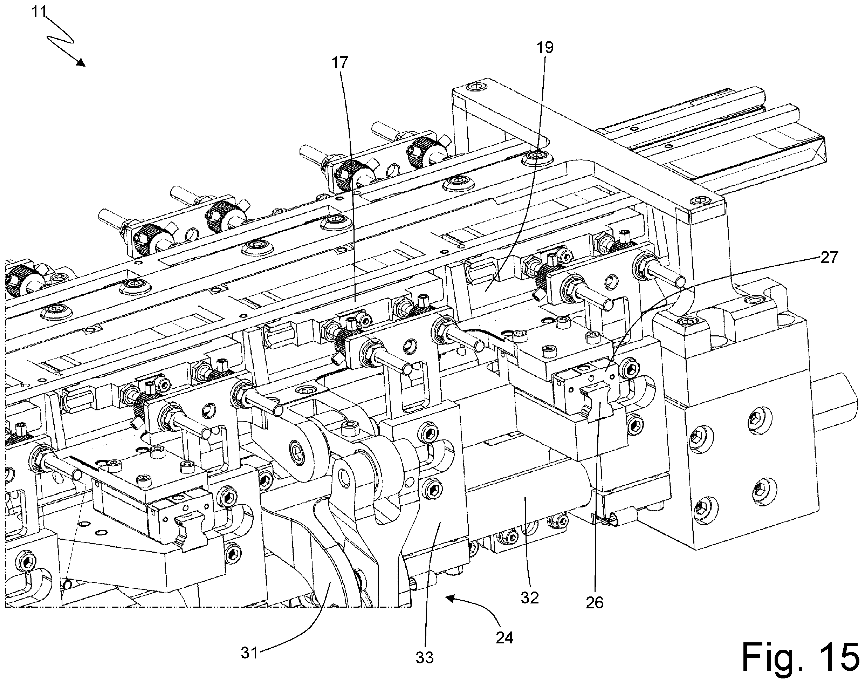

According to a preferred embodiment better illustrated in Figure 15, each conveying beam 19 is mounted to slide (translate) along the transverse direction D; namely, each conveying beam 19 has a pure translation movement along the transverse direction D. In particular, tracks 26 are provided which are integral with a frame of the wrapping unit 11 and are oriented along the transverse direction D, and slides 27 are provided which are mounted on the tracks 26 for sliding along the tracks 26 and support a respective conveying beam 19. According to what is better illustrated in Figure 13, the actuator device 24 comprises a rocker arm 28 which is mounted so as to rotate around a central rotation axis (parallel to the wrapping paths P) and is caused to rotate by an electric motor 29 by means of a transmission arm 30; the two opposite ends of the rocker arm 28 transmit the movement to the two conveying beams 19 by means of respective kinematic mechanisms 31.

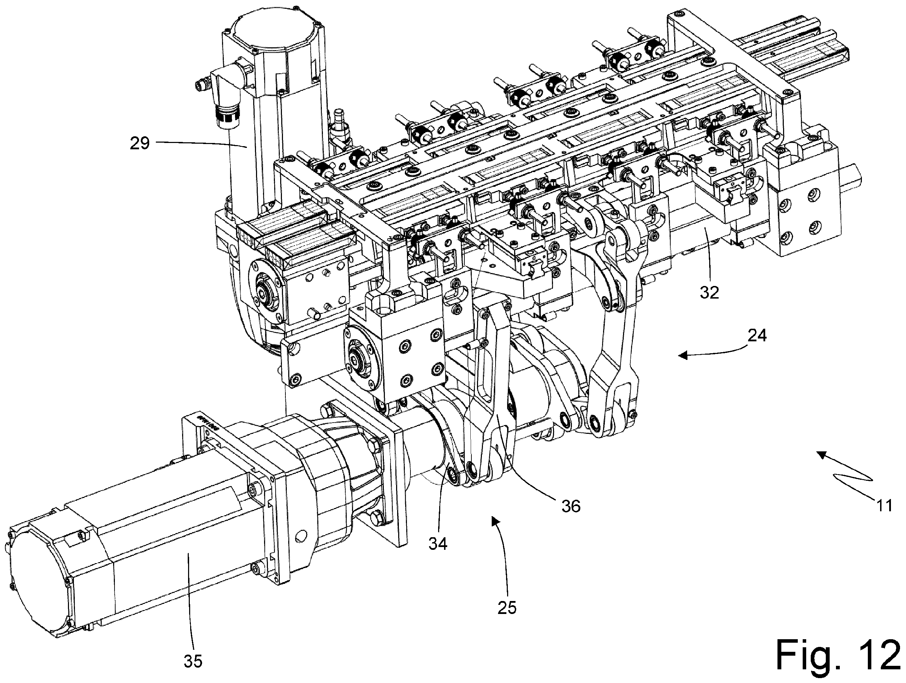

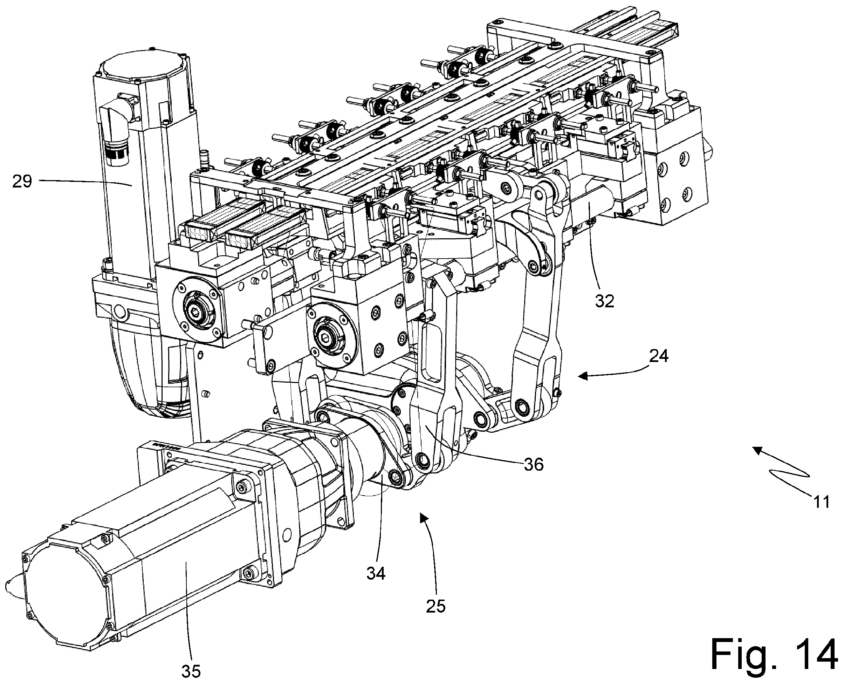

According to a preferred embodiment better illustrated in Figure 15, the outer sealing heads 17 of a same side are mounted so as to rotate around a rotation axis (parallel to the wrapping paths P). In particular, for each side a shaft 32 is provided which is mounted so as to rotate around the rotation axis (parallel to the wrapping paths P) and supports all the outer sealing heads 17 of the same side by means of respective support arms 33. Each support arm 33 has a lower end which is integral with the respective shaft 32 so as to rotate together with the shaft 32 and an upper end which supports a corresponding outer sealing head 17. According to what is better illustrated in Figures 12 and 14, the actuator device 25 comprises a rocker arm 34 which is mounted so as to rotate around a central rotation axis (parallel to the wrapping paths P) and is caused to rotate by an electric motor 35 mounted coaxial to the rotation axis of the rocker arm 34; the two opposite ends of the rocker arm 34 transmit the movement to the two shafts 32 by means of respective kinematic mechanisms 36.

In the embodiment illustrated in the accompanying figures, the two wrapping paths P are straight (namely the wrapping conveyor 12 is straight); according to an alternative embodiment not illustrated, the two wrapping paths P are circular (namely the wrapping conveyor 12 is rotary).

The embodiments described herein can be combined with one another without departing from the scope of protection of the present invention.

The wrapping unit 11 described above has numerous advantages.

Firstly, the wrapping unit 11 described above allows manufacturing the sealed wraps 1 with a high production quality (namely having precise and squared folds of the wrapping sheet 5 and strong and sealing seals of the wrapping sheet 5) also operating at a high production speed (namely with a high number of sealed wraps 1 produced in the time unit).

Furthermore, the wrapping unit 11 described above has a high accessibility to all its components and thanks to this characteristic it is possible to quickly perform size changing operations (namely the adaptation operations for modifying the characteristics of the sealed wraps 1 to be produced).

Finally, the wrapping unit 11 described above is relatively simple to manufacture thanks to the fact that the inner sealing heads 18 are fixed (namely devoid of movement) and thus involve minimum overall dimensions at the centre of the wrapping conveyor 12 where the space available is extremely reduced. In other words, all the transverse movements required by the wrapping unit 11 are moved outside the wrapping conveyor 12 where there is abundant space and thus the creation of such transverse movements is relatively simple.

The embodiment illustrated in the accompanying figures refers to the manufacturing of a pack for cigarettes, but the present invention is applicable without substantial modifications also to the manufacturing of any other type of pack for smoking articles (for example a pack for cigars, a pack for electronic cigarettes of the liquid vaporization type, a pack for new generation cigarettes without tobacco combustion...).

### LIST OF THE REFERENCE NUMERALS OF THE FIGURES

- 1: sealed wrap
- 2: group of cigarettes
- 3: extraction opening
- 4: closing label
- 5: wrapping sheet
- 6: reinforcement element
- 7: minor flap
- 8: minor flap
- 9: major flap
- 10: major flap
- 11: wrapping unit
- 12: wrapping conveyor
- 13: folding device
- 14: folding spirals
- 15: folding spirals
- 16: sealing device
- 17: outer sealing head
- 18: inner sealing head
- 19: conveying beam
- 20: channel
- 21: lower wall
- 22: slit
- 23: through openings
- 24: actuator device
- 25: actuator device
- 26: track
- 27: slide
- 28: rocker arm
- 29: electric motor
- 30: transmission arm
- 31: kinematic mechanism
- 32: shaft
- 33: support arm
- 34: rocker arm
- 35: electric motor
- 36: kinematic mechanism
- P: wrapping path
- S1: input station
- S2: output station
- D: transverse direction

## Claims

1. A wrapping unit (11) to produce, together, two sealed wraps (1) containing two respective groups (2) of smoking articles; the wrapping unit (11) comprises:
a wrapping conveyor (12), which is designed to convey the two sealed wraps (1) side by side along two respective wrapping paths (P) parallel to each other;
two sealing devices (16), each coupled to the wrapping conveyor (12), each configured to create a seal on two opposite sides of a respective sealed wrap (1) and each comprising at least one outer sealing head (17) arranged outside the wrapping paths (P) and at least one inner sealing head (18) arranged at the centre of the wrapping paths (P); and
a first actuator device (25) configured to move the two outer sealing heads (17) between a sealing position, in which the two outer sealing heads (17) are at a first minimum distance from the respective inner sealing heads (18), and a moving position, in which the two outer sealing heads (17) are at a first intermediate distance, greater than the first minimum distance, from the respective inner sealing heads (18);
the wrapping unit (11) is **characterized in that:**
the inner sealing heads (18) are arranged in a fixed position and do not make any movement;
the wrapping conveyor (12) comprises two conveying beams (19), which are arranged parallel and next to each other and internally have two respective channels (20), which define the two wrapping paths (P) and, in use, are crossed by the corresponding sealed wraps (1) conveyed by the wrapping conveyor (12); and
it is provided a second actuator device (24) configured to move the two conveying beams (19) between a sealing position, in which the two conveying beams (19) are at a second minimum distance from the respective inner sealing heads (18), and a moving position,
in which the two conveying beams (19) are at a second intermediate distance, greater than the second minimum distance, from the respective inner sealing heads (18).

2. The wrapping unit (11) according to claim 1, wherein the first actuator device (25) is configured to move the two outer sealing heads (17) also to a stop position, in which the two outer sealing heads (17) are at a first maximum distance, greater than the first minimum distance and the first intermediate distance, from the respective inner sealing heads (18).

3. The wrapping unit (11) according to claim 1 or 2, wherein the second actuator device (24) is configured to move the two conveying beams (19) also to a stop position, in which the two conveying beams (19) are at a second maximum distance, greater than the second minimum distance and the second intermediate distance, from the respective inner sealing heads (18).

4. The wrapping unit (11) according to claim 1, 2 or 3, wherein the first actuator device (25) is configured to move the two outer sealing heads (17) along a transverse direction (D), which is perpendicular to the two wrapping paths (P), and the second actuator device (24) is configured to move the two conveying beams (19) along the same transverse direction (D).

5. The wrapping unit (11) according to one of the claims from 1 to 4, wherein each conveying beam (19) laterally comprises through openings (23), which are arranged in the area of the sealing heads (17, 18) and through which the sealing heads (17, 18) can get into the conveying beam (19) from the outside and then come into contact with the sealed wraps (1) that are inside the conveying beam (19).

6. The wrapping unit (11) according to one of the claims from 1 to 5, wherein:
each conveying beam (19) has a continuous slit (22), which is arranged parallel to the respective wrapping path (P) and crosses the conveying beam (19) from side to side; and
the wrapping conveyor (12) comprises a pushing device, which pushes the sealed wraps (1) along the channel (20) of the corresponding conveying beam (19) from the back and comprises a series of pushing members, which are arranged inside the channel (20) of the corresponding conveying beam (19) and are supported by respective support arms, which engage the slit (22).

7. The wrapping unit (11) according to one of the claims from 1 to 6, wherein at the centre there is provided a single common heated body, which constitutes both the inner sealing head (18) for the right side and the inner sealing head (18) for the left side.

8. The wrapping unit (11) according to one of the claims from 1 to 6, wherein at the centre there are provided two separate and independent heated bodies, which constitute the inner sealing head (18) for the right side and the inner sealing head (18) for the left side, respectively.

9. The wrapping unit (11) according to one of the claims from 1 to 8, wherein the first actuator device (25) is separate from and independent of the second actuator device (24).

10. The wrapping unit (11) according to one of the claims from 1 to 9, wherein:
the wrapping conveyor (12) has a stepped law of movement alternating motion steps and stop steps; and
the actuator devices (24, 25) are configured to hold the outer sealing heads (17) and the conveying beams (19) in the moving position during the motion steps of the wrapping conveyor (12) and to move the outer sealing heads (17) and the conveying beams (19) from the moving position to the sealing position and vice versa during the stop steps of the wrapping conveyor (12).

11. The wrapping unit (11) according to one of the claims from 1 to 10, wherein each conveying beam (19) has a pure translation movement along a transverse direction (D) perpendicular to the wrapping paths (P).

12. The wrapping unit (11) according to claim 11 and comprising:
tracks (26), which are integral with a frame of the wrapping unit (11) and are oriented along the transverse direction (D);
slides (27), which are mounted on the tracks (26) to slide along the tracks (26) and support the conveying beams (19).

13. The wrapping unit (11) according to claim 12, wherein:
the second actuator device (24) comprises a first rocker arm (28), which is mounted so as to rotate around a first rotation axis and is caused to rotate by a first electric motor (29); and
two opposite ends of the rocker arm (28) transmit the movement to the two conveying beams (19) by means of respective first kinematic mechanisms (31).

14. The wrapping unit (11) according to one of the claims from 1 to 13, wherein each outer sealing head (17) is mounted so as to rotate around a second rotation axis parallel to the wrapping paths (P).

15. The wrapping unit (11) according to claim 14 and comprising two shafts (32), which are arranged on opposite sides of the wrapping conveyor (12), are mounted so as to rotate around respective second rotation axes parallel to the wrapping paths (P) and support the outer sealing heads (17) by means of respective support arms (33).

16. The wrapping unit (11) according to claim 15, wherein:
the first actuator device (25) comprises a second rocker arm (34), which is mounted so as to rotate around a third rotation axis and is caused to rotate by a second electric motor (35); and
two opposite ends of the second rocker arm (34) transmit the movement to the two shafts (32) by means of respective second kinematic mechanisms (36).

17. A wrapping method to produce, together, two sealed wraps (1) containing two respective groups (2) of smoking articles; the wrapping method comprises the steps of:
conveying, by means of a wrapping conveyor (12), two sealed wraps (1) side by side along two respective wrapping paths (P) parallel to each other;
creating a seal on two opposite sides of each sealed wrap (1) by means of two sealing devices (16), each coupled to the wrapping conveyor (12) and each comprising at least one outer sealing head (17) arranged outside the wrapping paths (P) and at least one inner sealing head (18) arranged at the centre of the wrapping paths (P); and
moving, by means of a first actuator device (25), the two outer sealing heads (17) between a sealing position, in which the two outer sealing heads (17) are at a first minimum distance from the respective inner sealing heads (18), and a moving position, in which the two outer sealing heads (17) are at a first intermediate distance, greater than the first minimum distance, from the respective inner sealing heads (18);
the wrapping method is **characterized in that:**
the inner sealing heads (18) are arranged in a fixed position and do not make any movement;
the wrapping conveyor (12) comprises two conveying beams (19), which are arranged parallel and next to each other and internally have two respective channels (20), which define the two wrapping paths (P) and, in use, are crossed by the corresponding sealed wraps (1) conveyed by the wrapping conveyor (12); and
the two conveying beams (19) are moved, by means of a second actuator device (24), between a sealing position, in which the two conveying beams (19) are at a second minimum distance from the respective inner sealing heads (18), and a moving position, in which the two conveying beams (19) are at a second intermediate distance, greater than the second minimum distance, from the respective inner sealing heads (18).
